# EUROPÄISCHE PATENTSCHRIFT

(11) **EP 0 909 776 B1**
(45) Veröffentlichungstag und Bekanntmachung des Hinweises auf die Patenterteilung: **28.08.2002**
(21) Anmeldenummer: 98119204.0
(22) Anmeldetag: 12.10.1998
(51) Int. Cl.: C08G 75/02, C09D 181/02

(54) **Abriebbeständige Beschichtungssysteme**
Abrasion resistant coating systems
Systèmes de revêtement résistant à l'abrasion

(30) Priorität: 17.10.1997 DE 19745667
(43) Veröffentlichungstag der Anmeldung: 21.04.1999
(73) Patentinhaber: Ticona GmbH, 65451 Kelsterbach (DE)
(72) Erfinder: Scheckenbach, Helmut Dr., 63225 Langen (DE)

(56) Entgegenhaltungen:
- US-A- 3 948 865
- SUGAMA T ET AL: 'THE PROTECTION OF ALUMINIUM ALLOYS IN HARSH, CORROSIVE ENVIRONMENTS BY OXIDIZED POLYPHENYLENE SULPHIDE COATINGS' POLYMERS AND POLYMER COMPOSITES Bd. 3, Nr. 4, 01 Januar 1995, Seiten 289 - 298, XP000557897

## Beschreibung

Die Erfindung betrifft polymere Beschichtungssysteme, die zur Verbesserung der Abriebbeständigkeit oxidierte Polyarylensulfide, insbesondere Polyarylensulfone oder teilweise oxidierte Polyarylensulfide, die neben SO₂- auch SO- und/oder S-Brückenglieder enthalten, und ihre Verwendung zur Herstellung beschichteter Formkörper. Alle oxidierten Polyarylensulfide im Sinne dieser Erfindung sind unschmelzbar.

Oxidierte Polyarylensulfide zur Verbesserung der Abriebbeständigkeit von Polymeren sind bekannt (DE 43 23 181, DE 43 23 121, deutsche Offenlegungsschriften DE 196 13 979 A1 und DE 197 09 035 A1 ). Die Verwendung für Beschichtungssysteme ist in diesen Anmeldungsschriften jedoch nicht genannt.

Da sich Beschichtungssysteme grundsätzlich anders verhalten als Formkörper, kann nicht automatisch auf eine verbesserte Abriebbeständigkeit bei Beschichtungs-systemen geschlossen werden.

Polymere Füllstoffe, beispielsweise Polyphenylensulfid (PPS), Polyethersulfon (PES) oder Polyamidimid (PAI), für polymere Beschichtungssysteme sind bekannt (DE 28 00 609, DE 24 62 863). Die Aufgabe dieser polymeren Füllstoffe ist primär jedoch nicht die Verbesserung des Abriebverhaltens, sondern hauptsächlich die Verbesserung der Haftung des Beschichtungssystems auf dem zu beschichtenden Substrat. Um dies zu erreichen, schmelzen die o. g. polymeren Füllstoffe während des Beschichtungsvorgangs auf und gehen hierbei eine feste Verbindung mit dem Substrat ein, sodaß eine gute Haftung zwischen Substrat und Beschichtungssystem erreicht wird. Diese polymeren Füllstoffe werden auch als Bindeharze bezeichnet.

Oxidierte Polyarylensulfide, insbesondere Polyarylensulfone, schmelzen jedoch während des Beschichtungsvorgangs nicht auf, sondern behalten ihre Partikelform bei und führen zu einer erhöhten Abriebbeständigkeit des Beschichtungssystems.

Die Verwendung von leicht oxidierten Polyarylensulfiden als Beschichtungsmittel sowie die Beschichtung von Substraten mit einer Mischung aus leicht oxidiertem Polyarylensulfid und Polytetrafluorethylen ist in US-A 3 948 865 offenbart. Die Verwendung von unschmelzbarem oxidierten Polyarylensulfid wird nicht beschrieben.

Es wurde gefunden, daß der Zusatz von unschmelzbaren oxidierten Polyarylensulfiden, insbesondere von Polyarylensulfonen, zu polymeren Beschichtungssystemen deren Abriebbeständigkeit erhöht. Dies ist überraschend, da andere polymere Zusatzstoffe, wie die Bindeharze, diese Eigenschaftsverbesserung nur in geringem Maße zeigen.

Die Erfindung betrifft somit polymere Beschichtungssysteme bestehend aus einem flüssigen Träger und einer Polymermischung, die mindestens ein unschmelzbares oxidiertes Polyarylensulfid enthält, sowie deren Verwendung zur Herstellung beschichteter Formkörper.

Die Polymermischung des Beschichtungssystems enthält im allgemeinen mindestens einen Kunststoff mit einem Anteil von 1,5 bis 99,5 Gew.-%, mindestens ein Bindeharz mit einem Anteil von 0 bis 98 Gew.-% und mindestens ein unschmelzbares oxidiertes Polyarylensulfid mit einem Anteil von 0,5 bis 60 Gew.-%. Der Anteil des flüssigen Trägers am Gesamtgewicht des Beschichtungssystems beträgt 1 bis 99 Gew.-%.

Kunststoffe sind wohlbekannt und werden beispielsweise beschrieben in Ullmann's Encyclopedia of Industrial Chemistry, VCH Verlagsgesellschaft mbH, Weinheim-New York, worauf Bezug genommen wird. Hierzu gehören beispielsweise organische Fluorpolymere, Volume A11, S. 393-430; Polyacrylamide und Polyacrylsäuren, Volume A21, S. 143-156; Polyacrylate, Volume A21, S. 157-178; Polyamide, Volume A21, S. 179-206; Polycarbonate, Volume A21, S.207-216; Polyester, Volume A21, S. 227-252; Polyimide, Volume A21, S. 253-273; Polymerblends, Volume A21, S. 274-305; Elektrisch leitfähige Polymere, Volume A21, S. 429-448; Hochtemperaturbeständige Polymere, Volume A21, S. 449-472; Polymethylmethacrylate, Volume A21, S. 473-486; Polyolefine, Volume A21, S. 487-578; Polyoxyalkylene, Volume A21, S. 579-590; Polyoxymethylene, Volume A21, S. 591-604; Polyphenylenoxide, Volume A21, S. 605-614; Polystyrole und Styrolcopolymere, Volume A21, S. 615-664; Polyurethane, Volume A21, S. 665-716; Polyvinylchloride, Volume A21, S.717-742; Polyvinylcompounds, Volume A21, S. 743-758; Polyvinylester, Volume A22, S. 1-10; Polyvinylether, Volume A22, S. 11-16; Polyvinylidenchloride, Volume A22, S. 17-30 und Silikone, Volume A24, S.57-94. Die Bezeichnung Kunststoffe schließt auch Mischungen bzw. Blends von Kunststoffen ein. Zu den Kunststoffen gehören ebenfalls die Duromere und Elastomere.

Bevorzugt sind organische Fluorpolymere und Silikone, besonders bevorzugt sind organische Fluorpolymere.

Bindeharze sind Polymere, die während des Einbrennvorgangs der Beschichtungssysteme aufschmelzen und für eine gute Haftung zwischen dem Kunststoff und dem zu beschichtenden Substrat sorgen. Werden Fluorpolymere als Kunststoffe für Beschichtungssysteme eingesetzt, sind typische Bindeharze beispielsweise Polyphenylensulfide, Polyaryletherketone, Polyamidimide, Polyimide und Polyethersulfone.

Oxidierte Polyarylensulfide sind lineare und/oder verzweigte Polyarylensulfide, deren Schwefelgruppen teilweise oder vollständig in Sulfongruppen überführt worden sind.

Oxidierte Polyarylensulfide und deren Herstellung werden beispielsweise in den deutschen Patentanmeldungen DE 43 14 737, DE 43 14 738, DE 44 40 010 und in der deutschen Offenlegungsschrift DE 195 31 163 A1 beschrieben, worauf Bezug genommen wird. Oxidierte Polyarylensulfide sind beispielsweise Polyarylensulfone, Polyarylensulfid-sulfone, Polyarylensulfoxid-sulfone und Polyarylensulfid-sulfoxidsulfone. Besonders bevorzugt sind oxidierte Polyarylensulfide, bei denen mindestens 30%, bevorzugt mindestens 60% der Schwefelbrücken in Sulfongruppen umgewandelt sind. Bevorzugte Polyarylensulfone sind Polyphenylensulfone, insbesondere Polyphenylensulfone mit mindestens 30%, bevorzugt mindestens 60% Sulfongruppen. Oxidierte Polyarylensulfide sind besonders wärmestabil und zeigen unter den Bedingungen des Einbrennvorgangs der Beschichtungssysteme eine ausreichende Thermostabilität.

Die mittlere Teilchengröße (d₅₀-Wert) der unschmelzbaren oxidierten Polyarylensulfide gemäß der Erfindung liegt im allgemeinen im Bereich von 0,3 bis 500 µm, vorzugsweise bei 1 bis 300 µm und besonders bevorzugt bei 5 bis 50 µm.

Die Anteile von Kunststoff, Bindeharz und unschmelzbarem oxidiertem Polyarylensulfid an der Polymermischung des Beschichtungssystems liegen im allgemeinen bei 1,5 bis 99,5 Gew.-%, vorzugsweise 20 bis 99 Gew.-% und besonders bevorzugt 50 bis 98 Gew.-% Kunststoff, bei 0 bis 98 Gew.-%, vorzugsweise 0 bis 60 Gew.-% und besonders bevorzugt 0 bis 40 Gew.-% Bindeharz und bei 0,5 bis 60 Gew.-%, vorzugsweise 1 bis 40 Gew.-% bzw. besonders bevorzugt 2 bis 30 Gew.-% oxidiertem Polyarylensulfid, wobei sich die Gewichtsanteile von Kunststoff, Bindeharz und oxidiertem Polyarylensulfid auf 100% ergänzen und die Gegenwart weiterer Stoffe zulassen.

Ferner enthält das Beschichtungssystem noch einen flüssigen Träger in einer Menge von 1 bis 99 Gew.-%, vorzugsweise 20 bis 80 Gew.-%, bezogen auf das Gesamtgewicht des Beschichtungssystems. Dieser flüssige Träger ist bevorzugt Wasser, für manche Anwendungen sind jedoch auch organische Lösemittel von Vorteil, wobei im Prinzip jedes organische Lösemittel geeignet ist, das für sich allein oder im Gemisch mit anderen Lösungsmitteln, auch mit Wasser, eine solche Flüchtigkeit besitzt, daß es sich während des Einbrennvorgangs leicht entfernen läßt, sich aber während des Aufbringvorgangs noch nicht zu stark verflüchtigt, und welches sich femer gegen Kunststoffe, Bindeharze und oxidierte Polyarylensulfide inert verhält.

Als besonders günstige organische Lösemittel haben sich Ethylenglykol, Diethylenglykol, Triethylenglykol, Propylenglykol und deren Mono- und Dialkylether, vorzugsweise verethert mit Alkylresten, die 1 bis 6 C-Atome aufweisen, bewährt. Geeignet sind auch polare aprotische Lösungsmittel wie N-Methylpyrrolidon, N,N-Dimethylformamid und Dimethylsulfoxid, aber auch unpolare Lösungsmittel wie Benzol, Toluol, Xylol oder aliphatische Kohlenwasserstoffe mit einem Siedepunkt von 60°C bis etwa 350°C.

Die Beschichtungssysteme gemäß der Erfindung können noch andere Bestandteile wie Dispergiermittel, Emulgatoren, Netzmittel, Puffer, thermische Stabilisatoren, UV-Stabilisatoren, Antistatika, Flammschutzmittel, Farbstoffe, Pigmente, anorganische und/oder organische Füllstoffe enthalten sowie Gleitmittelzusätze wie Molybdändisulfid, Graphit oder Polytetrafluorethylen.

Das erfindungsgemäße Beschichtungssystem kann wie folgt hergestellt werden:

Es wird zunächst eine Suspension der Bestandteile der Polymermischung im flüssigen Träger hergestellt. Hierbei können zunächst Stammsuspensionen aus jeweils nur einem Mischungsbestandteil hergestellt werden, die anschließend zu einer Suspension zusammengerührt werden, die dann alle Mischungsbestandteile enthält, oder man stellt gleich eine Suspension aus allen oder mehreren Mischungsbestandteilen her.

Die Herstellung der einzelnen Stammsuspensionen oder einer alle Mischungsbestandteile enthaltenden Suspension kann vorteilhaft durch Abreiben in einer Kugel- oder Rührwerkskugelmühle durchgeführt werden.

Die erhaltene Suspension kann durch Zugabe weiterer Mengen des flüssigen Trägers auf den gewünschten Gesamtfeststoffgehalt eingestellt werden, der der jeweiligen Aufbringungsmethode angepaßt ist.

Auf die angegebene Weise ist es auch möglich, Mischungen herzustellen, deren flüssiger Träger aus Gemischen von Wasser und mit Wasser mischbaren organischen Lösemitteln besteht.

Das so hergestellte erfindungsgemäße Beschichtungssystem kann nach üblichen Methoden wie Spritzen, Tauchen, Walzen, Aufstreichen oder Aufsprühen auf das Substrat aufgetragen werden. Nach dem Auftragen kann das beschichtete Substrat zunächst, je nach Art des verwendeten Kunststoffs und flüssigen Trägers, getrocknet und anschließend eingebrannt werden.

Bei Verwendung von Fluorpolymeren kann die Trocknungstemperatur je nach Art des flüssigen Trägers 20°C bis 300°C betragen. Anschließend kann das beschichtete Substrat etwa 1 Minute bis 2 Stunden bei Temperaturen von 200°C bis 450°C, vorzugsweise 220°C bis 420°C erhitzt werden, wobei die Bestandteile der Polymermischung eingebrannt und verfestigt werden.

Bei geeigneter Zusammensetzung der Polymermischung ist es auch möglich, diese als Pulverlack zu verwenden und ohne einen flüssigen Träger auf das zu beschichtende Substrat aufzutragen und einzubrennen.

Die erfindungsgemäß verwendeten Beschichtungssysteme eignen sich zur Beschichtung von Oberflächen von Substraten, deren Temperaturbeständigkeit so hoch ist, daß sie den Einbrennvorgang ohne Beschädigung überstehen. Dies sind beispielsweise metallische Substrate wie Aluminium, Stahl, Kupfer, Bronze und Messing, ebenso aber auch nichtmetallische Substrate wie Keramik, Porzellan oder Glas.

Die erfindungsgemäß verwendeten Beschichtungssysteme sind beispielsweise geeignet für die Beschichtung von Kochgeräten wie Bratpfannen, Tiegeln und Backformen oder -geräten oder für Ofenauskleidungen. Bei der Herstellung von beschichteten Gegenständen kann ein Werkstück oder Rohling beschichtet und dann geformt werden oder ein bereits geformtes Gerät beschichtet werden.

Darüber hinaus sind die erfindungsgemäß verwendeten Beschichtungssysteme beispielsweise geeignet zur Bildung von Überzügen auf vielen anderen Gegenständen. Hierzu gehören beispielsweise Ausrüstungen für industrielle Verfahren wie Formen, Walzen oder Rollen, Gleitlager, Rührer, Mischvorrichtungen, Rutschen, Trichter oder Schüttgutbehälter und Wärmeschweißbacken, Haushaltsgegenstände wie eiserne Sohlenplatten, Nahrungsmischgeräte und Eisseparatoren sowie Werkzeuge wie Sägeblätter. Die erfindungsgemäß verwendeten Beschichtungssysteme finden auch Anwendung in der Elektrotechnik, beispielsweise zur Herstellung von Drahtisolierungen.

### Beispiele:

Folgende Mischungen wurden aus einzelnen Suspensionen durch Rühren hergestellt:

**Tabelle 1**

| | Mischung A Feststoffgehalt [%] | Mischung B Feststoffgehalt [%] | Mischung C Feststoffgehalt [%] | Mischung D Feststoffgehalt [%] | Mischung E Feststoffgehalt [%] |
|---|---|---|---|---|---|
| PTFE (57,1%ig) | 80 | 77,5 | 75 | 70 | 60 |
| PFA (49,8%ig) | | | | | |
| PAI (11,02%ig) | 20 | 20 | 20 | 20 | 20 |
| PPS (25%ig) | | | | | |
| PPSO₂ (25%ig) | | 2,5 | 5 | 10 | 20 |

**Tabelle 2**

| | Mischung F Feststoffgehalt [%] | Mischung G Feststoffgehalt [%] | Mischung H Feststoffgehalt [%] | Mischung 1 Feststoffgehalt [%] | Mischung J Feststoffgehalt [%] |
|---|---|---|---|---|---|
| PTFE (57,1%ig) | 40 | 38,75 | 37,5 | 35 | 30 |
| PFA (49,8%ig) | 40 | 38,75 | 37,5 | 35 | 30 |
| PAI (11,02%ig) | 20 | 20 | 20 | 20 | 20 |
| PPS (25%ig) | | | | | |
| PPSO₂ (25%ig) | | 2,5 | 5 | 10 | 20 |

**Tabelle 3**

| | Mischung K Feststoffgehalt [%] | Mischung L Feststoffgehalt [%] | Mischung M Feststoffgehalt [%] | Mischung N Peststoffgehalt [%] | Mischung O Peststoffgehatt [%] |
|---|---|---|---|---|---|
| PTFE (57,1%ig) | 40 | 38,75 | 37,5 | 35 | 30 |
| PFA (49,8%ig) | 40 | 38,75 | 37,5 | 35 | 30 |
| PAI (11,02%ig) | 10 | 10 | 10 | 10 | 10 |
| PPS (25%ig) | 10 | 10 | 10 | 10 | 10 |
| PPSO₂ (25%ig) | | 2,5 | 5 | 10 | 20 |

Die Angabe in Klammer nach den einzelnen Mischungsbestandteilen gibt den Feststoffgehalt der jeweiligen Suspension an. Beispiel: PTFE (57,1%ig) beschreibt eine Suspension mit einem PTFE-Gehalt von 57,1 Gew.-%. Als Suspensionsmittel (flüssiger Träger) wurde Wasser verwendet.

Als PTFE (Polytetrafluorethylen) wurde Hostaflon TF 5035 der Dyneon GmbH, Burgkirchen, BR Deutschland verwendet. Produkteigenschaften sind im Datenblatt "Hostaflon" der Dyneon GmbH dokumentiert.

Als PFA (Perfluoralkoxy) wurde Hostaflon PFA 6900 der Dyneon GmbH, Burgkirchen, BR Deutschland verwendet. Produkteigenschaften sind im Datenblatt "Hostaflon" der Dyneon GmbH dokumentiert.

Als PAI (Bindeharz) wurde BH 9000 ein Polyamidimid der Vianova Resins GmbH, Mainz-Kastel, BR Deutschland verwendet. Produkteigenschaften sind im Produktkatalog der Vianova Resins GmbH dokumentiert.

Als PPS (Bindeharz) wurde Fortron 0205 B4/20 der Ticona GmbH, Frankfurt a.M., BR Deutschland verwendet. Produkteigenschaften sind im Datenblatt "Fortron" der Ticona GmbH dokumentiert.

PPSO₂ (Polyphenylensulfon) wurde folgendermaßen hergestellt:

63 kg Polyphenylensulfid-Pulver (d₅₀-Wert: 20 µm) mit einer T_{g} von 94°C und einem Tₘ von 290°C wurden in 219 1 Eisessig bei 50°C vorgelegt, 1,2 l konz. Schwefelsäure zugegeben und 91 kg Wasserstoffperoxid (50%) über 3 h zugetropft, wobei sich die Temperatur auf 60 - 65°C erhöhte. Nach einer Nachrührzeit von 2 h bei 65°C und 1 h bei 80°C wurde die Reaktionslösung abgekühlt, bei 50°C abgesaugt, mit Wasser gewaschen und getrocknet. Ausbeute: 70 kg; DSC-Daten: T_{g}: 352°C Tₘ: 520°C (Zersetzung); Elementaranalyse: (C₆H₄SO₂)ₙ - C: 55,6%, H: 3,2%, S: 24,6%, O: 16,0%. Dies entspricht einem Oxidationsgrad von ca. 65% bezogen auf den Schwefelgehalt im Polymer.

Die erhaltenen Mischungen wurden in einer Kugelmühle 18 h gemahlen und anschließend auf entfetteten Aluminiumplatten (100 x 100 x 1 mm) mittels einer Spritzpistole aufgetragen. Die Beschichtungeri wurden 15 min bei 90°C getrocknet und anschließend 15 min bei 250°C und 15 min bei 400°C eingebrannt.

An den beschichteten Substraten wurden folgende Untersuchungen durchgeführt:

Die Haftung wurde nach DIN 53 151 (Gitterschnitt-Test) bestimmt.

Beim Wasserkochtest wurde das beschichtete Substrat 4 h in siedendem Wasser gekocht. Anschließend wurde die Haftung nach DIN 53 151 bestimmt.

Beim Salzwasserkochtest wurde das beschichtete Substrat 3 h in siedendem Salzwasser gekocht. Anschließend wurde die Haftung nach DIN 53 151 bestimmt.

Beim Ölkochtest wurde das beschichtete Substrat 3 h in Speiseöl bei 180°C gekocht. Anschließend wurde die Haftung nach DIN 53 151 bestimmt.
Die Pendelhärte wurde nach DIN 53 157 bestimmt.

Die Erichsentiefung wurde nach DIN 53 156 bestimmt.

Der Abrieb wurde folgendermaßen bestimmt: Ein Pendel an dessen Ende sich ein Haushaltsschwamm der Marke Scotch-guard befindet.schwingt hin und her, wobei das rauhe Ende des Schwamms bei jedem Pendelschwung auf der Oberfläche des Substrats reibt. Die Anzahl der Zyklen beträgt 1000.

**Tabelle 4**

| Prüfung | Einheit | Mischung A | Mischung B | Mischung C | Mischung D | Mischung E |
|---|---|---|---|---|---|---|
| Schichtdicke minimal | µm | 20 | 19 | 15 | 20 | 20 |
| Schichtdicke maximal | µm | 75 | 72 | 67 | 74 | 73 |
| Haftung | Punkte | GT 0 | GT 0 | GT 0 | GT 0 | GT 0 |
| Haftung nach Wasserkochtest | Punkte | GT 0 | GT 0 | GT 0 | GT 0 | GT 0 |
| Haftung nach Salzwasserkochtest | Punkte | GT 1 | GT 0 | GT 0 | GT 0 | GT 0 |
| Haftung nach Ölkochtest | Punkte | GT 1 | GT 0 | GT 0 | GT 0 | GT 0 |
| Pendelhärte | Punkte | 47 | 51 | 55 | 60 | 65 |
| Erichsentiefung | mm | 10 | 10 | 10 | 10 | 10 |
| Abneb | mg | 20 | 12 | 8 | 5 | 3 |

**Tabelle 5**

| Prüfung | Einheit | Mischung F | Mischung G | Mischung H | Mischung 1 | Mischung J |
|---|---|---|---|---|---|---|
| Schichtdicke minimal | µm | 21 | 21 | 17 | 23 | 19 |
| Schichtdicke maximal | µm | 73 | 70 | 69 | 72 | 73 |
| Haftung | Punkte | GT 0 | GT 0 | GT 0 | GT 0 | GT 0 |
| Haftung nach Wasserkochtest | Punkte | GT 0 | GT 0 | GT 0 | GT 0 | GT 0 |
| Haftung nach Salzwasserkochtest | Punkte | GT 1 | GT 0 | GT 0 | GT 0 | GT 0 |
| Haftung nach Ölkochtest | Punkte | GT 1 | GT 0 | GT 0 | GT 0 | GT 0 |
| Pendelhärte | Punkte | 57 | 61 | 65 | 69 | 72 |
| Erichsentiefung | mm | 5 | 5 | 5 | 5 | 5 |
| Abrieb | mg | 19 | 10 | 7 | 3 | 1 |

**Tabelle 6**

| Prüfung | Einheit | Mischung K | Mischung L | Mischung M | Mischung N | Mischung O |
|---|---|---|---|---|---|---|
| Schichtdicke minimal | µm | 19 | 18 | 17 | 21 | 19 |
| Schichtdicke maximal | µm | 71 | 75 | 74 | 74 | 72 |
| Haftung | Punkte | GT 0 | GT 0 | GT 0 | GT 0 | GT 0 |
| Haftung nach Wasserkochtest | Punkte | GT 0 | GT 0 | GT 0 | GT 0 | GT 0 |
| Haftung nach Salzwasserkochtest | Punkte | GT 0 | GT 0 | GT 0 | GT 0 | GT 0 |
| Haftung nach Ölkochtest | Punkte | GT 0 | GT 0 | GT 0 | GT 0 | GT 0 |
| Pendelhärte | Punkte | 56 | 60 | 66 | 68 | 71 |
| Erichsentiefung | mm | 5 | 5 | 5 | 5 | 5 |
| Abrieb | mg | 20 | 13 | 7 | 4 | 2 |

## Patentansprüche

1. Polymeres Beschichtungsystem bestehend aus einem flüssigen Träger und einer Polymermischung, die mindestens ein unschmelzbares oxidiertes Polyarylensulfid enthält.

2. Polymeres Beschichtungssystem gemäß Anspruch 1, **dadurch gekennzeichnet, daß** die Polymermischung 1,5 bis 99,5 Gew.-% Kunststoff, 0 bis 98 Gew.-% Bindeharz und 0,5 bis 60 Gew.-% unschmelzbares oxidiertes Polyarylensulfid enthält.

3. Polymeres Beschichtungssystem gemäß Anspruch 1, **dadurch gekennzeichnet, daß** die Polymermischung 20 bis 99 Gew.-% Kunststoff, 0 bis 60 Gew.-% Bindeharz und 1 bis 40 Gew.-% unschmelzbares oxidiertes Polyarylensulfid enthält.

4. Polymeres Beschichtungssystem gemäß Anspruch 2, **dadurch gekennzeichnet, daß** der Kunststoff ein organisches Fluorpolymer oder ein Silikon und das Bindeharz ein Polyphenylensulfid, Polyaryletherketon, Polyamidimid, Polyimid oder Polyethersulfon ist.

5. Polymeres Beschichtungssystem gemäß Anspruch 1, **dadurch gekennzeichnet, daß** der Anteil des flüssigen Trägers am Gesamtgewicht des Beschichtungssystems 1 bis 99 Gew.-% beträgt.

6. Polymeres Beschichtungssystem gemäß Anspruch 1, **dadurch gekennzeichnet, daß** der flüssige Träger Wasser, Ethylenglykol, Diethylenglykol, Triethylenglykol, Propylenglykol, ein Mono- oder Dialkylether von Ethylenglykol, Diethylenglykol, Triethylenglykol oder Propylenglykol mit Alkylresten, die 1 bis 6 C-Atome aufweisen, N-Methylpyrrolidon, N,N-Dimethylformamid, Dimethylsulfoxid, Benzol, Toluol, Xylol ist oder ein aliphatischer Kohlenwasserstoff mit einem Siedepunkt von 60°C bis 350°C.

7. Polymeres Beschichtungssystem gemäß Anspruch 1, **dadurch gekennzeichnet, daß** das unschmelzbare oxidierte Polyarylensulfid ein lineares oder verzweigtes Polyarylensulfon, Polyarylensulfid-sulfon, Polyarylensulfoxid-sulfon oder Polyarylensulfid-sulfoxid-sulfon ist.

8. Verwendung eines polymeren Beschichtungssystems gemäß Anspruch 1 zur Beschichtung von Formkörpem.

9. Verwendung eines polymeren Beschichtungssystems gemäß Anspruch 1 zur Beschichtung der Oberfläche von Substraten aus Aluminium, Stahl, Kupfer, Bronze, Messing, Keramik, Porzellan oder Glas.

10. Verwendung einer Polymermischung, die mindestens ein unschmelzbares oxidiertes Polyarylensulfid enthält, zur Beschichtung von Formkörpern.

## Claims

1. A polymeric coating system consisting of a liquid vehicle and of a polymer mixture which comprises at least one infusible oxidized polyarylene sulfide.

2. The polymeric coating system as claimed in claim 1, wherein the polymer mixture comprises from 1.5 to 99.5% by weight of polymer, from 0 to 98% by weight of binder resin and from 0.5 to 60% by weight of infusible oxidized polyarylene sulfide.

3. The polymeric coating system as claimed in claim 1, wherein the polymer mixture comprises from 20 to 99% by weight of polymer, from 0 to 60% by weight of binder resin and from 1 to 40% by weight of infusible oxidized polyarylene sulfide.

4. The polymeric coating system as claimed in claim 2, wherein the polymer is an organic fluoropolymer or a silicone and the binder resin is a polyphenylene sulfide, polyaryl ether ketone, polyamideimide, polyimide or polyether sulfone.

5. The polymeric coating system as claimed in claim 1, wherein the proportion of the overall weight of the coating system accounted for by the liquid vehicle is from 1 to 99% by weight.

6. The polymeric coating system as claimed in claim 1, wherein the liquid vehicle is water, ethylene glycol, diethylene glycol, triethylene glycol, propylene glycol, a mono- or dialkyl ether of ethylene glycol, diethylene glycol, triethylene glycol or propylene glycol with alkyl radicals of 1 to 6 carbon atoms, N-methylpyrrolidone, N,N-dimethylformamide, dimethyl sulfoxide, benzene, toluene or xylene or an aliphatic hydrocarbon having a boiling point of from 60 to 350°C.

7. The polymeric coating system as claimed in claim 1, wherein the infusible oxidized polyarylene sulfide is a linear or branched polyarylene sulfone, polyarylene sulfide-sulfone, polyarylene sulfoxide-sulfone or polyarylene sulfide-sulfoxide-sulfone.

8. The use of a polymeric coating system as claimed in claim 1 for coating moldings.

9. The use of a polymeric coating system as claimed in claim 1 for coating the surface of substrates made of aluminum, steel, copper, bronze, brass, ceramic, porcelain or glass.

10. The use of a polymer mixture comprising at least one infusible oxidized polyarylene sulfide for coating moldings.

## Revendications

1. Système de revêtement polymère constitué d'un support liquide et d'un mélange de polymères qui contient un poly(sulfure d'arylène) oxydé non fusible.

2. Système de revêtement polymère selon la revendication 1, **caractérisé en ce que** le mélange de polymères contient de 1,5 à 99,5 % en poids de matière plastique, de 0 à 98 % en poids de résine servant de liant et de 0,5 à 60 % en poids de poly (sulfure d'arylène) oxydé non fusible.

3. Système de revêtement polymère selon la revendication 1, **caractérisé en ce que** le mélange de polymères contient de 20 à 99 % en poids de matière plastique, de 0 à 60 % en poids de résine servant de liant et de 1 à 40 % en poids de poly(sulfure d'arylène) oxydé non fusible.

4. Système de revêtement polymère selon la revendication 2, **caractérisé en ce que** la matière plastique est un polymère fluoré organique ou une silicone et la résine servant de liant est un poly(sulfure de phénylène), une polyaryléthercétone, un polyamide-imide, un polyimide ou une polyéthersulfone.

5. Système de revêtement polymère selon la revendication 1, **caractérisé en ce que** la proportion du support liquide, par rapport au poids total du système de revêtement, va de 1 à 99 % en poids.

6. Système de revêtement polymère selon la revendication 1, **caractérisé en ce que** le support liquide est l'eau, l'éthylèneglycol, le diéthylèneglycol, le triéthylèneglycol, le propylèneglycol, un éther mono- ou dialkylique d'éthylèneglycol, de diéthylèneglycol, de triéthylèneglycol ou de propylèneglycol à radicaux alkyle comportant de 1 à 6 atomes de carbone, la N-méthylpyrrolidone, le N,N-diméthylformamide, le diméthylsulfoxyde, le benzène, le toluène, le xylène ou un hydrocarbure aliphatique ayant un point d'ébullition de 60°C à 350°C.

7. Système de revêtement polymère selon la revendication 1, **caractérisé en ce que** le poly(sulfure d'arylène) oxydé non fusible est une polyarylène-sulfone, poly(sulfure d'arylène-sulfone), polyarylène-suifoxyde-sulfone ou poly(sulfure d'arylène-sulfoxyde-sulfone) linéaire ou ramifiée.

8. Utilisation d'un système de revêtement polymère selon la revendication 1, pour le revêtement d'articles préformés.

9. Utilisation d'un système de revêtement polymère selon la revendication 1, pour le revêtement de la surface de supports en aluminium, acier, cuivre, bronze, laiton, céramique, porcelaine ou verre.

10. Utilisation d'un mélange de polymères, qui contient au moins un poly(sulfure d'arylène) oxydé non fusible, pour le revêtement d'articles préformés.
